# EUROPEAN PATENT APPLICATION

(11) **EP 4 844 855 A1**
(43) Date of publication of application: **25.11.2026**
(21) Application number: 23866744.8
(22) Date of filing: 25.09.2023
(51) Int. Cl.: H01M 10/0525, C01G 33/00, C01G 23/00

(54) **BATTERY CELL, ADDITIVE FOR MODULATING THE CHARGING SPEED AND/OR THE CYCLABILITY OF A BATTERY CELL, METHOD FOR MODULATING THE CHARGING SPEED AND/OR CYCLABILITY OF A BATTERY CELL, USE OF NIOBIUM OR TITANIUM NANOPARTICLES OR COMBINATIONS THEREOF, AND USE OF THE BATTERY CELL**

(71) Applicant: Instituto Hercílio Randon, 95181899 Caixas do Sul (BR)
(72) Inventor: BOARETTO, Joel, 95032-180 Caxias do Sul (BR); CRUZ, Robinson Carlos Dudley, 95020-472 Caxias do Sul (BR); CID, Cristiani Campos Plá, 88025-000 Florianópolis (BR)
(74) Representative: WSL Patentanwälte Partnerschaft mbB
(86) International application number: PCT/BR2023/050317
(87) International publication number: WO 2024/059922

(57) **Abstract**

The present invention relates to a battery cell for use in vehicles, portable electronic devices or other suitable devices. Specifically, the present invention discloses a battery cell comprising Niobium or titanium nanoparticles, or combinations thereof, in its cathode, anode, or electrolyte, which exhibits a charge speed and/or cyclability far superior to the prior art battery cells. Additionally, the present invention also relates to the use of nanoparticles as cathode, anode, or electrolyte dopant and to the use of said battery cells. The present invention falls within the technical fields of materials science, electrochemistry, and nanotechnology.

## Description

### Field of the Invention

The present invention relates to a battery cell, particularly for use in vehicles. Additionally, it relates to the use of nanoparticles of Niobium, Titanium, or combinations thereof as a dopant in cathode, anode, or electrolyte of a battery cell. The present invention falls within the technical fields of materials science, electrochemistry, and nanotechnology.

### Background of the Invention

Currently, sustainable development is a socio-economic-environmental model that is directly related to economic growth in a way so as to ensure social inclusion and environmental protection. In this context, clean technologies emerge, which are new industrial processes or changes made to existing processes intended to reduce the consumption of raw materials, energy consumption, environmental impacts and waste. This need creates opportunities for the development of new clean energy generation technologies.

In the search for cleaner technologies, electric vehicles have emerged as an attractive alternative as they are less polluting compared to vehicles powered by burning fossil fuels. Thus, one of the central components of electrically powered vehicles are battery cells. Regarding battery cells, among the important parameters for determining their characteristics that influence the selection of components, with the ultimate goal of forming the secondary battery, we can mention charge density, power, energy efficiency, Coulomb efficiency (conservation of the total charge of a cycle over time), specific capacity (mAh/g, mass referring to the active material (LiFePO4-C)), charge status (measurement to monitor the performance and lifespan of batteries), charge rate (or charge speed), and cyclability (cycle life) of the battery.

In short, charge density refers to the amount of charge relative to the battery weight and is an important parameter for battery range. Power refers to the power per unit of mass that the battery can provide, and it is an important parameter for the battery performance. Energy efficiency is related to the parameters mentioned above and represents the battery performance. Charge (and discharge) rate is a crucial parameter nowadays with the spread of hybrid or 100% electric vehicles, and an increase in charge speed becomes increasingly important with the exponential increase in hybrid or 100% electric vehicles on the roads around the world. The cyclability refers to the number of times a battery can be charged and discharged while maintaining its energy efficiency. When energy efficiency or charge status substantially decreases after a large number of charge and discharge cycles, the battery is usually replaced, that is, when it is approaching or has reached the end of its lifespan.

Among the most common types of battery cells used in vehicles are the lithium-ion batteries and nickel-metal hydride batteries.

Lithium-ion batteries are also used in portable electronic devices. They offer a good power-to-weight ratio, high energy efficiency, and good performance even at higher temperatures. Due to their good power-to-weight ratio and high energy efficiency, lithium-ion batteries are a good option for electric cars because they provide good range, meaning the ability to travel long distances on a single charge.

Another type of battery is the nickel-metal hydride battery, which is also used in electric cars. They have a longer lifespan than lithium-ion batteries, but they have some disadvantages such as substantial heat generation and a fairly high cost.

US9190697B2 discloses a composition comprising nanoparticles of an ion-conducting material (electrolytes), more specifically a solid composition from joining metal oxides, among which oxides niobium is mentioned. On the other hand, the document does not specifically disclose a battery cell or an additive comprising Niobium or Titanium nanoparticles, or combinations thereof, as defined in the present invention.

US20180294476A1 discloses a lithium battery comprising a cathode, an anode, and an electrolyte, wherein the anode comprises a lithium coating or a lithium alloy, and the cathode optionally comprises niobium. On the other hand, the document does not specifically disclose a battery cell or an additive comprising niobium or titanium nanoparticles, or combinations thereof, as defined in the present invention.

The article by Qi et al. (2022) (Research progress of anode materials for lithium-ion battery) discloses the use of lithium for an anode, more specifically, lithium titanate, graphite, and carbon-based electrodes for a lithium battery. On the other hand, the document does not specifically disclose a battery cell or an additive comprising Niobium or Titanium nanoparticles, or combinations thereof, as defined in the present invention.

The article by Lim et al. (2021) (Nanoparticle-Dispersed Colloidal Electrolytes for Advanced Lithium Batteries) proposes a new type of organic solvent lithium salt electrolyte containing dispersed nanoparticles, which could potentially be used in lithium batteries. On the other hand, the document does not specifically disclose a battery cell or an additive comprising Niobium or Titanium nanoparticles, or combinations thereof, as defined in the present invention.

The article by Budak et al. (2020) (Carbide-Derived Niobium Pentoxide with Enhanced Charge Storage Capacity for Use as a Lithium-Ion Battery Electrode) discloses that niobium pentoxide is a promising anode material in lithium batteries. On the other hand, the document does not specifically disclose a battery cell or an additive comprising Niobium or Titanium nanoparticles, or combinations thereof, as defined in the present invention.

Thus, based on the literature reviewed, no documents were found that anticipated or suggested the teachings of the present invention, so the solution proposed here has novelty and inventive activity compared to the prior art.

In view of the above, it is clear that the search for renewable, accessible and clean technologies is a constant need, since the generation of energy through conventional means, such as the combustion of biodiesel, methanol, natural gas and liquefied petroleum gas, entails several harmful environmental and socioeconomic effects. Among these technologies, the development of more efficient battery cells becomes a necessity.

### Summary of the Invention

Thus, the present invention solves the prior art drawbacks by providing a battery cell with a much higher charge speed and/or cyclability than the battery cells of the prior art. Charge speed is becoming an increasingly important differentiating factor due to the exponential increase in hybrid or 100% electric vehicles around the world. On the other hand, the invention presented herein can also be applied to lithium-ion batteries in portable electronic devices, such as smartphones and laptops.

However, the inventors surprisingly found that properties such as charge speed and/or cyclability are further significantly improved when using nanoparticles with a significant degree of amorphization, such as an amorphization of at least 19% for the mass quantity of niobium nanoparticles.

In one embodiment, these nanoparticles are capable of increasing the charge speed and/or cyclability of a battery that is approaching or has reached the end of its lifespan. This surprising effect makes it possible to revitalize and reuse batteries that are approaching or have reached the end of their lifespan.

In the context of the present invention, the expression "Niobium nanoparticle" encompasses various chemical entities containing Niobium, including metallic Niobium, niobium oxides, hydrates, hydrides, carbides, or nitrides, Niobium iron or Niobium alloyed with other metals or transition metals, or combinations thereof. It also includes Niobium pentoxide (Nb₂O₅), NbO₂, and NbO.

Due to the substantial niobium reserves in the Brazilian territory, it is an advantage of the present invention to use this element for the production of more efficient battery cells.

In a first aspect, the present invention defines a battery cell comprising at least one cathode, at least one anode and at least one electrolyte, wherein at least one of the cathode, the anode or the electrolyte comprises a mass quantity of Niobium nanoparticles, titanium nanoparticles, or combinations thereof.

In one embodiment of the battery cell, said mass quantity of nanoparticles comprises a degree of amorphization of at least 19%.

In a second aspect, the present invention defines an additive for modulating the charge speed and/or cyclability of a battery cell comprising a mass quantity of Niobium nanoparticles, titanium nanoparticles, or combinations thereof.

In a third aspect, the present invention defines a method for modulating the charge speed and/or cyclability of a battery cell comprising at least one step of incorporating the additive as defined above into at least one of the cathode, the anode, or the electrolyte of a battery cell.

In a fourth aspect, the present invention defines the use of nanoparticles of Niobium, Titanium, or combinations thereof as cathode, anode, or electrolyte dopant in a battery cell.

In a fifth aspect, the present invention defines the use of a battery cell as previously defined in a vehicle or electronic device. In one embodiment of the battery cell use, said electronic device is a portable electronic device. In one embodiment of the battery cell use, said portable electronic device is a smartphone or laptop.

These and other objects of the invention will be readily appreciated by those skilled in the art and will be described in detail below.

### Brief Description of the Figures

The following figures are presented:
Fig. 1 shows a discharge and charge curve profile of a prior art reference LiFePO₄ battery. Showing the variation of potential over time in battery discharge and charge cycles.
Fig. 2 shows a discharge and charge curve profile of a LiFePO₄ battery of the present invention containing Nb nanoparticles. Showing the variation of potential over time in battery discharge and charge cycles.
Fig. 3 shows charge and discharge curves of battery cells without nanoparticles in the salt bridge model.
Fig. 4 shows the charge and discharge curves of cells containing Niobium pentoxide nanoparticles incorporated into the cathode in the salt bridge model.
Fig. 5 shows a comparison of the charge and discharge curves in the vertical electrochemical cell model with and without Niobium pentoxide nanoparticles.
Fig. 6 depicts graphs comparing the cyclability for the different electrolyte constructions tested in the horizontal electrochemical cell model.
Fig. 7 shows the results of test 1 described in example 8 comparing the electrolyte to KCl only, the electrolyte to a first layer of Nb₂O₅ nanoparticles, and the electrolyte to a first layer of Nb₂O₅ nanoparticles and a second layer of TiO₂ nanoparticles.
Fig. 8 shows the results of test 2 described in example 8 comparing the electrolyte to KCl only, the electrolyte to a first layer of TiO₂ nanoparticles, and the electrolyte to a first layer of TiO₂ nanoparticles and a second layer of Nb₂O₅ nanoparticles.
Fig. 9 shows the results of test 3 described in example 8 comparing the electrolyte to KCl only and a layer of Nb₂O₅ microparticles.
Fig. 10 illustrates the results of test 1 of example 9, showing that there was a more significant reduction in charge time when only a first layer of Niobium pentoxide was used (19.04 min).
Fig. 11 illustrates the results of test 2 of example 9, showing that there was already a significant reduction when only a first layer of Titanium dioxide was used (15.52 min). However, even more surprisingly, there was an even more significant reduction when a second layer of Niobium pentoxide was applied over the first layer (12.97 min).

### Detailed Description of the Invention

The present invention relates to a battery cell comprising Niobium nanoparticles as a dopant in its electrolyte. The presence of a small concentration of Nb nanoparticles in the electrolyte material resulted in a significantly higher charge speed compared to the prior art batteries.

In the context of the present invention, the expression "Niobium nanoparticle" encompasses various chemical entities containing Niobium, including metallic niobium, niobium oxides, hydrates, hydrides, carbides, or nitrides, Niobium iron or Niobium alloyed with other metals or transition metals, or combinations thereof. It also includes niobium pentoxide (Nb₂O₅), NbO₂, and NbO.

Due to the substantial Niobium reserves in the Brazilian territory, it is an advantage of the present invention to use this element for the production of more efficient battery cells.

In the context of the present invention, the expression "degree of amorphization" should be understood as the extent to which a material exhibits a predominantly disordered phase, as opposed to predominantly monocrystalline and polycrystalline phases. "Amorphization" can be understood as a process of loss of long-range order of atoms, molecules, or ions in the crystalline structure of a given material, although it may also exhibit a short-range order.

In the context of the present invention, the term "nanoparticle" should be understood as a particle that can have a diameter ranging from 1 to 1000 nm.

In the context of the present invention, the term "carbon-based material" should be understood as any porous carbon-based material that allows physical or chemical retention of lithium ions. Non-limiting examples of said carbon-based materials may include coal, coke, graphene, synthetic or natural graphite.

In the context of the present invention, the term "lithium-based material" should be understood as a cathode material that serves as a source of Li⁺ ions, such that Li⁺ ions migrate from the cathode to the anode during the battery charge cycle, and Li⁺ ions make the reverse path during the discharge cycle. Non-limiting examples of said lithium-based materials may be LiCoO₂ to LiFePO₄.

In the context of the present invention, the term "polymeric material" should be understood as a porous polymeric membrane that allows the passage of Li+ ions that transit between the cathode and anode of the battery. Non-limiting examples of said polymeric material may be polyolefin-based materials with a semi-crystalline structure, e.g., polyethylene, polypropylene, and mixtures thereof.

In the context of the present invention, the term "electrolyte" should be understood as a solution that contacts and promotes electrical contact between the electrodes, in addition to allowing the diffusion of Li+ ions. Non-limiting examples of said electrolyte are organic solutions of lithium salt, such as LiCl, LiPF₆, LiBF₄, LiBOB (bis(oxalate)lithium borate) or mixtures thereof. Non-limiting examples of organic solvents to compose the electrolyte may be propylene carbonate (PC), ethyl methyl carbonate (EMC), ethylene carbonate (EC), diethyl carbonate (DEC), dimethyl carbonate (DMC), and mixtures thereof.

Without wishing to be bound by theory, a more interesting charge and discharge cycle is one having a high charge speed and an appropriate discharge rate (depending on the battery purpose/use), conserving the total charge involved in a cycle over time (Coulomb efficiency).

In a first aspect, the present invention defines a battery cell comprising at least one cathode, at least one anode and at least one electrolyte, wherein at least one of the cathode, the anode or the electrolyte comprises a mass quantity of Niobium nanoparticles, titanium nanoparticles, or combinations thereof.

In one embodiment of the battery cell, said mass quantity of nanoparticles comprises a degree of amorphization of at least 19%.

In one embodiment of the battery cell, said mass quantity of nanoparticles preferably comprises a degree of amorphization of at least 20%, more preferably at least 25%, more preferably at least 30%, more preferably at least 35%, more preferably at least 39%, more preferably at least 40%, more preferably at least 45%, more preferably at least 50%, more preferably a degree of amorphization of at least 55%, more preferably at least 60%, more preferably at least 65% and even more preferably a degree of amorphization of at least 70%. In one embodiment, the degree of amorphization is at least 71%, more preferably at least 72%, more preferably at least 73%. In a non-limiting embodiment, the degree of amorphization is 74%.

In one embodiment of the battery cell, said mass quantity of nanoparticles preferably comprises a degree of amorphization of at least 39%, preferably a degree of amorphization of at least 55% and even more preferably a degree of amorphization of at least 70%.

In one embodiment of the battery cell, said niobium nanoparticles comprise NbO, NbO₂, or Nb₂O₅. In one embodiment of the battery cell, said niobium nanoparticles comprise Nb₂O₅.

In one embodiment of the battery cell, said titanium nanoparticles comprise TiO₂.

In one embodiment of the battery cell, said niobium nanoparticles comprise a particle size distribution profile of: d10: between 14 and 110 nm; d50: between 29 and 243 nm; and d90: between 89 and 747 nm.

In one embodiment of the battery cell, said titanium nanoparticles comprise a particle size distribution profile of: d10 from 148 to 189 nm; d50 from 239 to 485 nm; d90 from 402 to 970 nm.

In one embodiment of the battery cell, the anode contains natural or synthetic graphite, lithium titanate (LTO), copper-clad graphite, copper, platinum, or combinations thereof.

In one embodiment of the battery cell, the cathode comprises lithium-based material. In one embodiment, said lithium-based material is LiCoO₂ or LiFePO₄.

In one embodiment of the battery cell, said lithium-based material is coated with aluminum.

In one embodiment of the battery cell, said electrolyte is either organic or aqueous.

In one embodiment of the battery cell, the organic electrolyte comprises a lithium salt and an organic solvent. In one embodiment, said lithium salt is LiCl, LiPF₆, LiBF₄, LiBOB (bis(oxalate)lithium borate) or mixtures thereof. In one embodiment, said organic solvent is propylene carbonate (PC), ethyl methyl carbonate (EMC), ethylene carbonate (EC), diethyl carbonate (DEC), dimethyl carbonate (DMC), or mixtures thereof.

In one embodiment of the battery cell, said aqueous electrolyte comprises LiCl, KCl, or a mixture thereof.

In a second aspect, the present invention defines an additive for modulating the charge speed and/or cyclability of a battery cell comprising a mass quantity of Niobium nanoparticles, titanium nanoparticles or combinations thereof.

In one embodiment of the additive, said modulation of the charge speed and/or cyclability of a battery cell is intended to increase the charge speed and/or cyclability. In one embodiment, said additive is for increasing the charge speed and/or cyclability of a battery that is approaching or has reached the end of its lifespan.

In one embodiment of the additive , said mass quantity of nanoparticles comprises a degree of amorphization of at least 19%.

In one embodiment of the additive, said mass quantity of nanoparticles preferably comprises a degree of amorphization of at least 20%, more preferably at least 25%, more preferably at least 30%, more preferably at least 35%, more preferably at least 39%, more preferably at least 40%, more preferably at least 45%, more preferably at least 50%, more preferably a degree of amorphization of at least 55%, more preferably at least 60%, more preferably at least 65% and even more preferably a degree of amorphization of at least 70%. In one embodiment, the degree of amorphization is at least 71%, more preferably at least 72%, more preferably at least 73%. In a non-limiting embodiment, the degree of amorphization is 74%.

In one embodiment of the additive, said mass quantity of nanoparticles preferably comprises a degree of amorphization of at least 39%, preferably a degree of amorphization of at least 55% and even more preferably a degree of amorphization of at least 70%.

In one embodiment of the additive, said niobium nanoparticles comprise NbO, NbO₂, or Nb₂O₅.

In one embodiment of the additive, said niobium nanoparticles comprise Nb₂O₅.

In one embodiment of the additive, said titanium nanoparticles comprise TiO₂.

In a third aspect, the present invention defines a method for modulating the charge speed and/or cyclability of a battery cell comprising at least one step of incorporating the additive as defined above into at least one of the cathode, the anode, or the electrolyte of a battery cell.

In one embodiment of the method, said modulation of the charge speed and/or cyclability of a battery cell is intended to increase the charge speed and/or cyclability. In one embodiment, the method is for increasing the charge speed and/or cyclability of a battery that is approaching or has reached the end of its lifespan.

In a fourth aspect, the present invention defines the use of nanoparticles of Niobium, Titanium, or combinations thereof as cathode, anode, or electrolyte dopant in a battery cell.

In one embodiment of use, said niobium nanoparticles comprise Nb₂O₅.

In one embodiment of use, said titanium nanoparticles comprise TiO₂.

In one embodiment of use, the nanoparticles comprise a degree of amorphization of at least 19%.

In one embodiment of use, said nanoparticles preferably comprises a degree of amorphization of at least 20%, more preferably at least 25%, more preferably at least 30%, more preferably at least 35%, more preferably at least 39%, more preferably at least 40%, more preferably at least 45%, more preferably at least 50%, more preferably a degree of amorphization of at least 55%, more preferably at least 60%, more preferably at least 65% and even more preferably a degree of amorphization of at least 70%. In one embodiment, the degree of amorphization is at least 71%, more preferably at least 72%, more preferably at least 73%. In a non-limiting embodiment, the degree of amorphization is 74%.

In one embodiment of use, said nanoparticles preferably comprise a degree of amorphization of at least 39%, preferably a degree of amorphization of at least 55% and even more preferably a degree of amorphization of at least 70%.

In a fifth aspect, the present invention defines the use of a battery cell as previously defined in a vehicle or electronic device. In one embodiment of the battery cell use, said electronic device is a portable electronic device. In one embodiment of the battery cell use, said portable electronic device is a smartphone or laptop.

### Examples

The examples shown here are intended only to exemplify one of the several ways of carrying out the invention, however without limiting the scope thereof.

### Example 1 - Battery structure

An example of a battery cell of the present invention features a closed battery structure with several layers of cathodes and anodes separated by spacers. The cathode is an aluminum electrode with adjacent layers of LiFePO₄ and adjacent layers of graphite, while the anode is a copper electrode with adjacent layers of graphite. The cathode and anode are separated by spacers made of a layer of porous polymeric material that allows the passage of lithium ions. The cathode and anode are contacted with an electrolyte solution containing a mixture of LiCl in propylene carbonate. This electrolyte has a concentration of 1 mM LiCl (42.39 mg of LiCl diluted in 4 mL of isopropyl alcohol) with a final volume of 100 mL, using propylene carbonate.

### Example 2 - Preparation process of Niobium pentoxide nanoparticles

A Labstar LS01 ball mill equipment (Netzsch) was fed with micrometric particles of niobium pentoxide. Said process involves high-energy wet milling. The particle suspension was 17.7% by mass, consisting of approximately 3500 g of milli-Q water + 10 M NaOH and 750 g of the solid sample, which was prepared and stabilized in the mill mixing tank at pH 9 and titrated with 10 M NaOH. The milling spheres used were yttria-stabilized zirconia, 400 µm in diameter. The milling chamber was filled to 80% by volume and the suspension temperature was below 40°C. The mill rotation speed was set to 3000 rpm, and milling was conducted for 8 hours. To stabilize the suspension at pH 9, 10 M NaOH was added during milling, and samples were taken from time to time in order to measure particle sizes.

In the present example, several embodiments of nanoparticle preparations of Niobium pentoxide were obtained, with purity greater than 99%. Commercial Niobium pentoxide, with the particle size distribution described in Table 1, was pre-comminuted in a high-energy mill containing Yttria-stabilized zirconia spheres with a diameter of 400 µm, in a liquid medium and the pH adjusted to 6.6. The mill rotation speed was 3500 rpm, and the particle milling was carried out at a temperature below 40°C. Table 4 shows the particle size distribution (PSD) of incoming (commercial product) and outgoing niobium pentoxide from a pre-comminution step.

**Table 1 - Input PSD (commercial product) and output after pre-comminution.**

| **PSD for niobium pentoxide** | | |
|---|---|---|
| **cumulative %** | **diameter [µm]** | |
| | **Input** | **Output** |
| 1.13 | 2.130 | 0.991 |
| 2.97 | 4.030 | 1.450 |
| 4.87 | 6.720 | 1.880 |
| 6.22 | 8.680 | 2.130 |
| 10.00 | 13.400 | 2.770 |
| 12.72 | 16.400 | 3.120 |
| 15.03 | 18.700 | 3.550 |
| 17.96 | 21.200 | 4.030 |
| 21.73 | 24.100 | 4.580 |
| 26.56 | 27.400 | 5.210 |
| 32.68 | 31.100 | 6.120 |
| 40.22 | 35.300 | 7.440 |
| 50.00 | 40.600 | 8.880 |
| 59.08 | 45.600 | 10.160 |
| 69.48 | 51.800 | 12.700 |
| 79.47 | 58.900 | 16.500 |
| 88.11 | 66.900 | 21.200 |
| 94.59 | 76.000 | 27.400 |
| 98.55 | 86.400 | 35.300 |
| 99.99 | 98.100 | 40.100 |

The mean specific surface area S (m²/g) of the particles after the pre-comminution step was 0,32 m²/g.

In one embodiment, the pre-comminuted particles were then fed to a high-energy mill, applying conditions like those described above, but with Zr spheres of 200 µm and milling for different times, until each nanoparticle preparation was obtained. Three different nanoparticle preparations were obtained, each with a defined particle size distribution as described in Table 2.

**Table 2 - Particle size distribution of three different preparations (C, D and E) of Niobium pentoxide nanoparticles.**

| **PSD for niobium pentoxide** | | | |
|---|---|---|---|
| **cumulative %** | **diameter [µm]** | | |
| | **C** | **D** | **E** |
| 1.13 | 0.074 | 0.021 | 0.009 |
| 2.97 | 0.082 | 0.024 | 0.010 |
| 4.87 | 0.098 | 0.027 | 0.012 |
| 6.22 | 0.104 | 0.029 | 0.012 |
| 10.00 | 0.119 | 0.033 | 0.014 |
| 12.72 | 0.131 | 0.036 | 0.016 |
| 15.03 | 0.138 | 0.038 | 0.017 |
| 17.96 | 0.145 | 0.040 | 0.017 |
| 21.73 | 0.159 | 0.044 | 0.019 |
| 26.56 | 0.175 | 0.048 | 0.021 |
| 32.68 | 0.192 | 0.053 | 0.023 |
| 40.22 | 0.212 | 0.058 | 0.025 |
| 50.00 | 0.243 | 0.067 | 0.029 |
| 59.08 | 0.282 | 0.078 | 0.034 |
| 69.48 | 0.322 | 0.089 | 0.038 |
| 79.47 | 0.376 | 0.104 | 0.045 |
| 88.11 | 0.413 | 0.114 | 0.049 |
| 94.59 | 0.455 | 0.125 | 0.054 |
| 98.55 | 0.550 | 0.152 | 0.066 |
| 99.99 | 0.747 | 0.206 | 0.089 |

Further details regarding the process for obtaining the nanoparticles can be found in patent application BR112023003019 by the inventors of the present application. In the examples of this application, samples that were used were subjected to 12 hours of milling.

Without wishing to be bound by theory, it is understood that the samples subjected to 12 hours of milling, which exhibit a higher degree of amorphization (74%), contribute to the surprising effects observed.

### Example 3 - Preparation process of nanoparticle preparation of Titanium dioxide

In this embodiment, a batch of 1.125 kg of TiO₂ particles with particle size distribution of D90 1.320 µm, D50 0.6098 µm and D10 0.153 µm was fed to a high energy mill with 5 liters of water and containing 3.65kh/l 0.2-0.4mm zeta spheres. The milling parameters were Tmax 60°C, solids content 18.36%. Operating the high-energy mill for several cycles, from 1 to 8 cycles of 1 hour each, at a pressure of 1.1 to 1.2 bar, pump speed of 90 min⁻¹, flow rate of 51 kg slurry/h, agitator speed of 3700 min⁻¹, inlet material temperature varying between 21.3°C and 37.1°C and outlet material temperature varying between 22.4°C and 49.2°C in the respective cycles, the raw energy was 2.4 kW and the milling energy was from 1.8 to 14.4 kWh in the respective cycles. The particle size distribution profile obtained is described in Table 3 below:

**Table 3 - particle size distribution profile obtained after multiple comminution cycles under the conditions indicated above.**

| **cycles** | **0** | **1** | **2** | **3** | **4** | **5** |
|---|---|---|---|---|---|---|
| **D10 (µm)** | 0.253 | 0.189 | 0.160 | 0.157 | 0.162 | 0.148 |
| **D50 (µm)** | 0.608 | 0.485 | 0.315 | 0.292 | 0.298 | 0.239 |
| **D90 (µm)** | 1.320 | 0.970 | 0.747 | 0.693 | 0.562 | 0.402 |

For cooling, the parameters were inlet temperatures of 7.3°C and 11.4°C, respectively in the milling chamber, mechanical seal, circulation tank and chiller, each of these stages with a flow rate of 1000 liters per hour of cooling water, making up 4000 liters per hour.

Further details regarding the process for obtaining the nanoparticles can be found in patent application BR102023010990 by the inventors of the present application. In the examples of this application, samples that were used were subjected to 12 hours of milling.

Without wishing to be bound by theory, it is understood that the samples subjected to 12 hours of milling, which exhibit a higher degree of amorphization, contribute to the surprising effects observed.

### Example 4 - Process for incorporating Nb nanoparticles

The incorporation of nanoparticles is done with a dilution in propylene carbonate containing 26.6 mg of Nb₂O₅ nanoparticles. Said dilution is subsequently deposited onto an Al/LiFePO₄-C cathode, which is then subjected to an oven at 100°C for 30 min before testing to obtain the charge and discharge curves.

### Example 5 - Charge and discharge curves

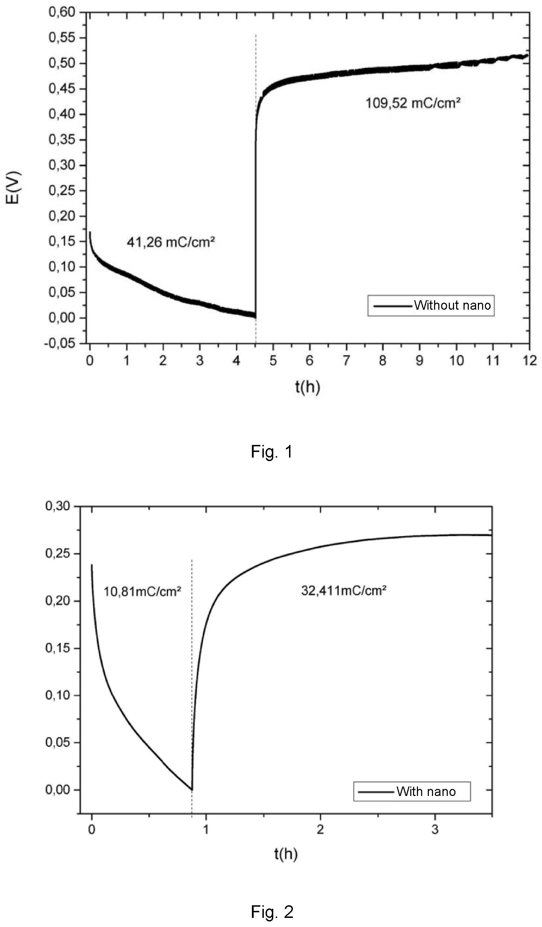

The electrode terminals produced in example 4 (Al-cathode and Cu-anode) are contacted with the electrolyte containing a mixture of LiCl in propylene carbonate, and the resulting battery is subjected to charge and discharge cycles as illustrated in Fig. 1 (prior art battery) and Fig. 2 (battery of the present invention) containing Nb nanoparticles.

A comparison of the graphs in Figs. 1 and 2 clearly shows that the battery of the present invention containing Nb₂O₅ nanoparticles (Fig. 2) exhibits a much faster charge speed than the prior art battery (Fig. 1).

From the graphs in Figs. 1 and 2, it can be seen that the cyclability increased by 5.5x, with a substantial increase in the cyclability and charge speed, as can be seen in Table 4:

**Table 4 - Comparison of cycle speed without niobium pentoxide nanoparticles and with niobium pentoxide nanoparticles in this experimental model:**

| **Cycle** | |
|---|---|
| Without nano Nb | 270 min |
| With nano Nb | 49 min |

### Example 6 - Salt bridge (alternative model)

A second battery cell model tested was the salt bridge model. In this model, the cathode was made of Al/LiFePO₄-C, the electrolyte was an organic compound of propylene carbonate with LiCl, and the anode was made of platinum. The system also included a reference electrode.

A mass of niobium pentoxide nanoparticles (milling time 12h) was incorporated into the Al/LiFePO₄-C cathode.

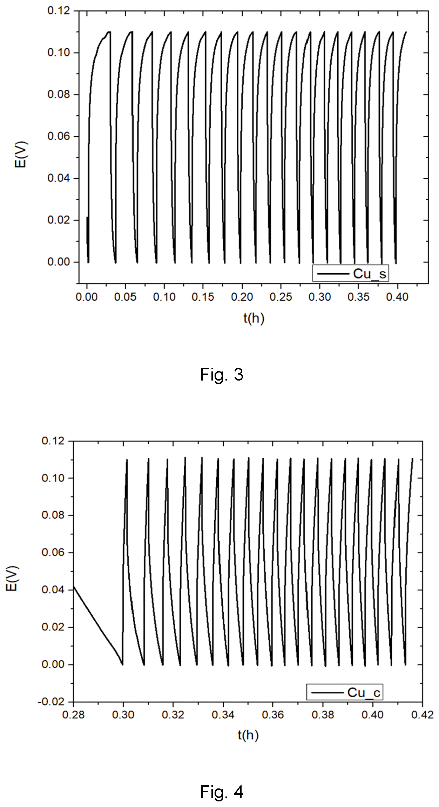

Fig. 3 shows charge and discharge curves of battery cells without nanoparticles.

Fig. 4 shows the charge and discharge curves of cells containing niobium pentoxide nanoparticles incorporated into the cathode.

Based on the graphs in Figs. 3 and 4, it can be seen that the cyclability increased approximately 4x in this model, with a substantial increase in cyclability and charge speed, as can be seen in Table 5:

**Table 5 - Comparison of cycle speed without Niobium pentoxide nanoparticles and with niobium pentoxide nanoparticles in this experimental model:**

| **Cycle** | |
|---|---|
| Without nano Nb | 26 min |
| With nano Nb | 7 min |

### Example 7 - Vertical electrochemical cell (alternative model)

A third battery cell model tested was the vertical electrochemical cell model. In this model, the cathode was made of Au/Pb (Prussian Blue), the electrolyte was an aqueous solution of 1M KCl, and the anode was made of platinum. The system also included a reference electrode.

In this model, a mass of niobium pentoxide nanoparticles was incorporated into a 1M KCl solution electrolyte, reaching a concentration of 10 mM of Nb₂O₅.

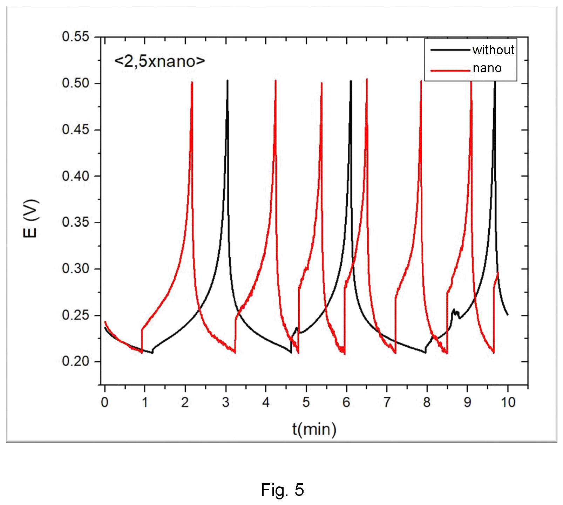

Fig. 5 shows the charge and discharge curves of the vertical electrochemical cell with and without nanoparticles.

From the graphs in Fig. 5, it can be seen that the presence of nanoparticles increased cyclability by approximately 2.2x in this model, with a substantial increase in cyclability and charge speed, as can be seen in Table 6:

**Table 6 - Comparison of cycle speed without niobium pentoxide nanoparticles and with niobium pentoxide nanoparticles in this experimental model:**

| **Cycle** | |
|---|---|
| Without nano Nb | 3.45 min |
| With nano Nb | 1.3 min |

### Example 8 - Horizontal electrochemical cell (alternative model)

A fourth battery cell model tested was the horizontal electrochemical cell model. In this model, the cathode was made of Au/Pb (Prussian Blue), the electrolyte was an aqueous solution of 1M KCl (designated as S1), and the anode was made of platinum. The system also included a reference electrode.

In this model, a mass of Niobium pentoxide and Titanium dioxide nanoparticles was incorporated into a 1M KCl solution electrolyte. The concentration of nanoparticles is 10 mM for both. The solution containing 10 mM of TiO₂ was designated as S2, and the solution containing 10 mM of Nb₂O₅ was designated as S3.

In this model, a mixture of Niobium pentoxide particles and Titanium dioxide was tested. The first step was the electrodeposition growth of the cathodes, i.e., Prussian Blue (PB) films grown on an Au substrate (PB/Au, PB thickness ~400 nm, corresponding to a charge of 30 mC). The second step was to prepare a 1M KCl solution in deionized water (S1). The third step was to prepare S2 and S3.

Test route 1: charge and discharge tests were performed using a PB/Au substrate: First, only with 2 mL of S1. After the test, 1 mL of solution is removed and 1 mL of S2 is added (waiting 30 minutes for the particles to settle and the electrode to be completely coated), then proceeding with the second test. Finally, remove the solution, add 1 mL of S3 (waiting 30 minutes for the particles to settle and the electrode to be completely coated), and proceed with the test.

Test route 2: considers the following order for inserting the solutions: first S3 and then S2.

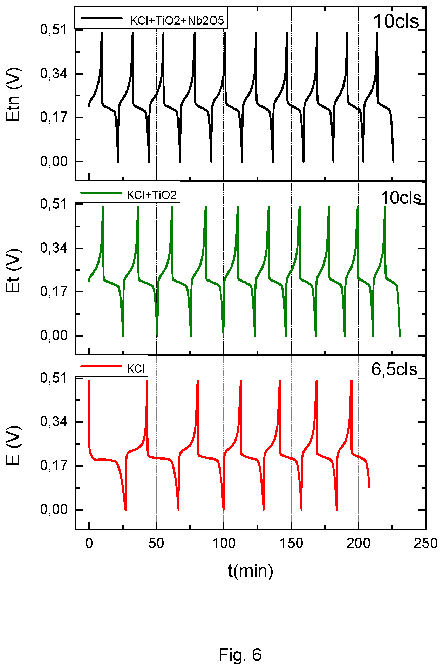

The results of the test above are shown in Fig. 6.

Fig. 6 depicts graphs comparing the cyclability for the different electrolyte constructions tested.

Table 7 shows a comparative analysis of the results shown in Fig. 6.

**Table 7 - Comparative analysis of results**

| **Mixture** | **Time of 1 cycle [s]** | **Percentage of time in a cycle relative to KCl** |
|---|---|---|
| PB6 KCl | 1787.4 | 100% |
| PB6 KCl + TiO₂ | 1372.2 | 76.8% |
| PB6 KCl + TiO₂ + Nb₂O₅ | 1371.6 | 76.7% |

For the sample above, it was found that 10 cycles starting with TiO₂ and then adding Nb₂O₅ reduced the cycle time by 9.4 min.

S1 was prepared using 7.455 g of KCl diluted in distilled and deionized water, totaling a volume of 100 mL (1M KCl).

A second test was conducted with the following electrolytes:

Electrolyte 1: 7.455 g of KCl diluted in distilled and deionized water, totaling a volume of 100 mL or 1M KCl.

Electrolyte 2: 0.02658 g of Nb₂O₅ nanoparticles were diluted in solution 1, resulting in a total volume of 10 mL or 10 mM of Nb₂O₅.

Electrolyte 3: 0.00798 g of TiO₂ nanoparticles were diluted in solution 1, resulting in a total volume of 10 mL or 10 mM of TiO₂.

Electrolyte 4: 0.02658 g of Nb₂O₅ microparticles were diluted in solution 1, resulting in a total volume of 10 mL or 10 mM of Nb₂O₅.

The experiment was conducted at LFFS using an electrode produced in the laboratory along with a potentiostat and a quartz microbalance.

Procedure: The test was performed on a 30 mC PB electrode (cathode), charge and discharge test from 0 to 0.5 V and from 0.5 to 0 V, respectively. The current used for the tests was 5 µA.

Test 1: By following the procedure, the test was first performed with electrolyte 1, from which 2 mL were used to perform the measurements. After acquiring the data, 2 mL were withdrawn and 2 mL of electrolyte 2 were added. After ~30 minutes, it was observed that the nanoparticles formed a film completely covering the electrode. Thus, after acquiring the data, 2 mL were withdrawn and 2 mL of electrolyte 3 were added (which also settled, thus covering the entire electrode). Acquiring data and ending the tests with this electrode.

Test 2 (same as test 1, reversing the order of Ti and Nb use, a new PB electrode was used): By following the procedure, the test was first performed with electrolyte 1, from which 2 mL were used to perform the measurements. After acquiring the data, 2 mL were withdrawn and 2 mL of electrolyte 3 were added. After ~30 minutes, it was observed that the nanoparticles formed a film completely covering the electrode. Thus, after acquiring the data, 2 mL were withdrawn and 2 mL of electrolyte 2 were added, which also settled, thus covering the entire electrode. Acquiring the data and ending the tests with this electrode.

Test 3: By following the procedure, the test was first performed with electrolyte 1, from which 2 mL were used to perform the measurements. After acquiring the data, 2 mL were withdrawn and 2 mL of electrolyte 4 were added. After ~30 minutes, it was observed that the nanoparticles formed a film completely covering the electrode. Thus, after acquiring the data, 2 mL were withdrawn and 2 mL of electrolyte 2 were added, which also settled, thus covering the entire electrode. Acquiring the data and ending the tests with this electrode.

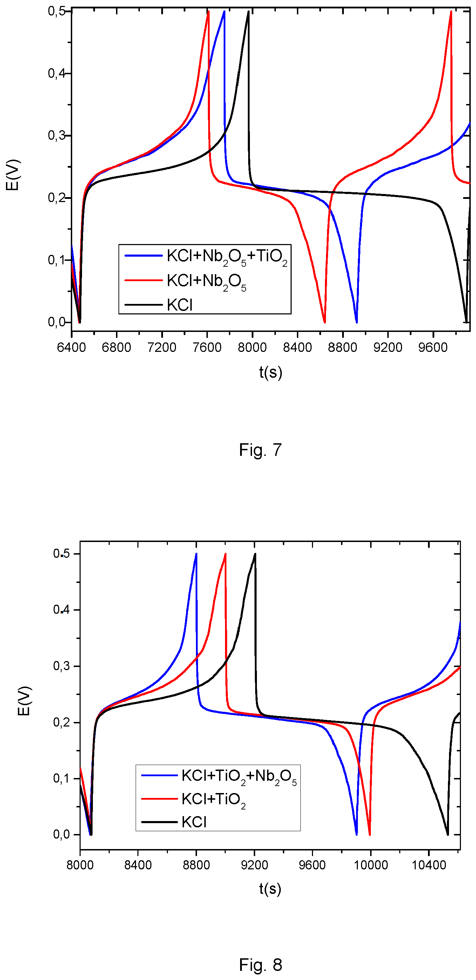

Fig. 7 shows the results of test 1 described above comparing the electrolyte to KCI only, the electrolyte to a first layer of Nb₂O₅ nanoparticles, and the electrolyte to a first layer of Nb₂O₅ nanoparticles and a second layer of TiO₂ nanoparticles.

Fig. 8 shows the results of test 2 described above comparing the electrolyte to KCI only, the electrolyte to a first layer of TiO₂ nanoparticles, and the electrolyte to a first layer of TiO₂ nanoparticles and a second layer of Nb₂O₅ nanoparticles.

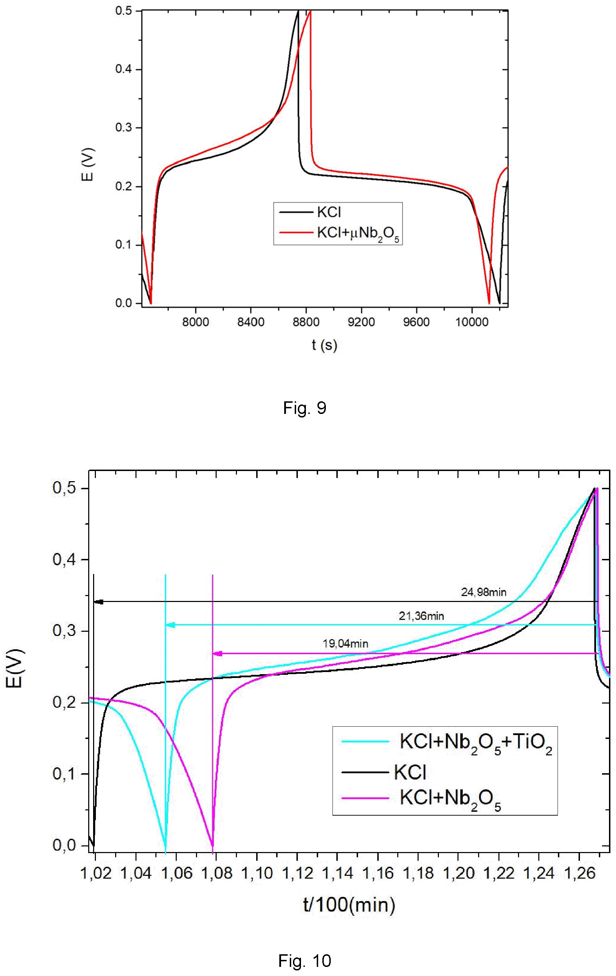

Fig. 9 shows the results of test 3 described above comparing the electrolyte to KCI only and a layer of Nb₂O₅ microparticles.

Figs. 7, 8, and 9 show that there is a significant difference in the changes in properties depending on the order in which the layers are added in the horizontal electrochemical cell. Additionally, it can be seen that the same effect is not observed when using microparticles instead of nanoparticles. Highlighting the surprising effect resulting from the use of nanoparticles with more amorphous characteristics (12h milling).

Based on the results of test 1, it is possible to observe that there was an increase in charge speed, and cyclability increased by 1.3x when compared to the results of test 3, which uses Niobium pentoxide microparticles.

### Example 9 - Horizontal electrochemical cell (alternative model)

Another round of tests was conducted using an experimental protocol similar to example 8. The following electrolytes were used:

Electrolyte 1: 7.455 g of KCI diluted in distilled and deionized water, totaling a volume of 100 mL or 1M KCI.

Electrolyte 2: 0.02658 g of Nb₂O₅ nanoparticles were diluted in solution 1, resulting in a total volume of 10 mL or 10 mM of Nb₂O₅.

Electrolyte 3: 0.00798 g of TiO₂ nanoparticles were diluted in solution 1, resulting in a total volume of 10 mL or 10 mM of TiO₂.

Procedure: 30 mC PB electrode (cathode) charge and discharge test from 0 to 0.5 V and from 0.5 to 0 V, respectively. The current used for the tests was 5 µA.

**Test 1:** Charge and discharge test using electrolyte 1, of which 2 mL was used to perform the measurements. After acquiring the data, 2 mL were withdrawn and 2 mL of electrolyte 2 were added. After ~30 minutes, it was observed that the nanoparticles formed a film completely covering the electrode. Thus, after acquiring the data, 2 mL were withdrawn and 3 mL of electrolyte 2 were added, which also settled, thus covering the entire electrode. Acquiring the data and ending the tests with this electrode. The *"natos"* visually came off the electrode after washing with water.

**Test 2:** (same test 1 but reversing the order of the nano electrodes and a new PB electrode). By following the procedure, the test was first performed with electrolyte 1, from which 2 mL were used to perform the measurements. After acquiring the data, 2 mL were withdrawn and 2 mL of electrolyte 3 were added. After ~30 minutes, it was observed that the nanoparticles formed a film completely covering the electrode. Thus, after acquiring the data, 2 mL were withdrawn and 2 mL of electrolyte 2 were added, which also settled, thus covering the entire electrode. Acquiring the data and ending the tests with this electrode. The *"natos"* visually came off the electrode after washing with water.

Fig. 10 illustrates the results of test 1 showing that there was a more significant reduction in charge time when only a first layer of Niobium pentoxide was used (19.04 min).

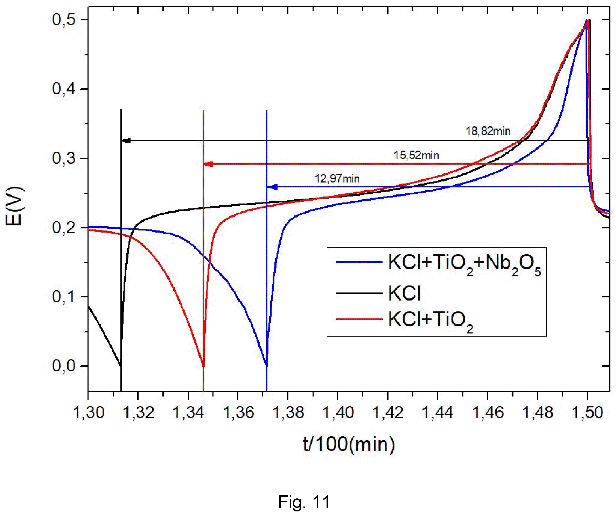

Fig. 11 illustrates the results of test 2 showing that there was already a significant reduction when only a first layer of Titanium dioxide was used (15.52 min). However, there was surprisingly an even more significant reduction when a second layer of Niobium pentoxide was applied over the first layer (12.97 min).

A comparison of the figures shows that the order of the layers unexpectedly affected the results in the horizontal electrochemical cell model. Charge time reduction was most surprising when a first layer of Titanium dioxide was used, followed by a second layer of Niobium pentoxide.

In both cases, it was observed that Niobium pentoxide was able to decrease the charge time and cyclability in the experimental model.

Without wishing to be bound by theory, it is understood that the Niobium pentoxide samples subjected to 12 hours of milling, which exhibit a higher degree of amorphization, contribute to the surprising effects observed. This result is corroborated when comparing Niobium microparticles (which exhibit a lower degree of amorphization).

### Example 10 - Comparison of all models

Table 8 compares the types of models tested in this patent application.

**Table 8 - Summary of the results of the models tested in the examples**

| **Experiment** | **Anode** | **Cathode** | **Electrolyte** | **Insertion of NTOs** | **Increasing cycle speed with the nanos** |
|---|---|---|---|---|---|
| **Battery closed** | Cu/C | Al/LiFePO4 -C | Propylene carbonate (PC) | Nano layer inserted over the cathode: Al/LiFePO4-C/nano-Nb | 5.5X |
| **Salt bridge** | Platinum | Al/LiFePO4 -C | PC + LiCl | Nano layer inserted over the cathode: Al/LiFePO4-C/nano-Nb | 4x |
| **Vertical Electroche mical Cell** | Platinum | Au/PB | 1M KCl | Nano-Nb inserted in suspension in 1M KCl electrolyte | 2.2x |
| **Horizontal Electroche mical Cell** | Platinum | Au/PB | 1M KCl | Nano-NTO layer inserted over the cathode: Au/PB/NTO (Nb/Ti) | 1.3x |

In all cases, it was observed that Niobium pentoxide was able to decrease the charge time and cyclability in the experimental model.

Without wishing to be bound by theory, it is understood that the niobium pentoxide samples subjected to 12 hours of milling, which exhibit a higher degree of amorphization, contribute to the surprising effects observed. This result is corroborated when comparing Niobium microparticles (which exhibit a lower degree of amorphization).

The examples demonstrate that Niobium pentoxide and Titanium dioxide nanoparticles, in addition to combinations thereof, are able to increase the charge speed and cyclability of several types of battery cells.

Without wishing to be bound by theory, a more interesting charge and discharge cycle is one having a high charge speed and an appropriate discharge rate (depending on the battery purpose/use), conserving the total charge involved in a cycle over time (Coulomb efficiency). The tests performed show an increase in the number of cycles (battery life), while maintaining the initial charge, under the use of additives.

Those skilled in the art will appreciate the knowledge disclosed herein and will be able to reproduce the invention in the disclosed embodiments and in other variants and alternatives thereof. encompassed by the scope of the following claims.

## Claims

1. A battery cell comprising at least one cathode, at least one anode and at least one electrolyte, **characterized in that** at least one of the cathode, the anode or the electrolyte comprises a mass quantity of Niobium nanoparticles, titanium nanoparticles, or combinations thereof.

2. The battery cell of claim 1, **characterized in that** said mass quantity of nanoparticles comprises a degree of amorphization of at least 19%.

3. The battery cell of claim 1, **characterized in that** the mass quantity of nanoparticles preferably comprises a degree of amorphization of at least 39%, preferably a degree of amorphization of at least 55% and even more preferably a degree of amorphization of at least 70%.

4. The battery cell of claim 1 or 2, **characterized in that** the Niobium nanoparticle comprises NbO, NbO₂, or Nb₂O₅.

5. The battery cell of claim 4, **characterized in that** the Niobium nanoparticle comprises Nb₂O₅.

6. The battery cell of claim 1 or 2, **characterized in that** the Titanium nanoparticle comprises TiO₂.

7. The battery cell of claim 1, **characterized in that** the anode contains natural or synthetic graphite, lithium titanate (LTO), copper-clad graphite, copper, platinum, or combinations thereof.

8. The battery cell of claim 1, **characterized in that** the cathode comprises lithium-based material.

9. The battery cell of claim 1, **characterized in that** the electrolyte is organic or aqueous.

10. The battery cell of claim 9, **characterized in that** said organic electrolyte comprises a lithium salt and an organic solvent.

11. The battery cell of claim 10, **characterized in that** the lithium salt is LiCl, LiPF₆, LiBF₄, LiBOB (bis(oxalate)lithium borate) or mixtures thereof.

12. The battery cell of claim 10, **characterized in that** the organic solvent is propylene carbonate (PC), ethyl methyl carbonate (EMC), ethylene carbonate (EC), diethyl carbonate (DEC), dimethyl carbonate (DMC) or mixtures thereof.

13. The battery cell of claim 9 **characterized in that** said aqueous electrolyte comprises LiCl, KCl, or a mixture thereof.

14. An additive for modulating the charge speed and/or cyclability of a battery cell, **characterized in that** it comprises a mass quantity of Niobium nanoparticles, titanium nanoparticles, or combinations thereof.

15. The additive of claim 14, **characterized in that** said modulation of the charge speed and/or cyclability of a battery cell is for increasing the charge speed and/or cyclability.

16. The additive of claim 15, **characterized in that** it is for increasing the charge speed and/or cyclability of a battery that is approaching or has reached the end of its lifespan.

17. The additive of claim 14, **characterized in that** said mass quantity of nanoparticles comprises a degree of amorphization of at least 19%.

18. A method for modulating the charge speed and/or cyclability of a battery cell, **characterized in that** it comprises at least one step of incorporating the additive as defined in claim 14 into at least one of the cathode, the anode, or the electrolyte of a battery cell.

19. The use of nanoparticles of Niobium, Titanium, or combinations thereof, **characterized in that** it is cathode, anode, or electrolyte dopant in a battery cell.

20. The use of claim 19, **characterized in that** the Niobium nanoparticles comprise Nb₂O₅.

21. The use of claim 19, **characterized in that** the titanium nanoparticles comprise TiO₂.

22. The use of claim 19, **characterized in that** the nanoparticles comprise a degree of amorphization of at least 19%.

23. The use of a battery cell as defined in claim 1 or 2, **characterized in that** it is a vehicle or electronic device.
